# EUROPEAN PATENT APPLICATION

(11) **EP 4 796 840 A1**
(43) Date of publication of application: **26.08.2026**
(21) Application number: 26154429.0
(22) Date of filing: 27.01.2026
(51) Int. Cl.: F23R 3/28

(54) **MICROMIXER FOR COMBUSTOR, COMBUSTOR INCLUDING SAME AND METHOD OF MIXING TUBE REPAIR**

(30) Priority: 21.02.2025 US 202519059495
(71) Applicant: GE Vernova Technology GmbH, 5400 Baden (CH)
(72) Inventor: EMINOGLU, Cem Murat, Greenville, 29615 (US); BELLINO, Mark Carmine, Greenville, 29615 (US); BELSOM, Keith Cletus, Greenville, 29615 (US); DORRIETY, Daniel James, Greenville, 29615 (US); MATTHEW, Christopher Diller, Greenville, 29615 (US)
(74) Representative: Openshaw & Co.

(57) **Abstract**

A micromixer (120) for combusting a fuel-air mixture in a combustion chamber (131) of a combustor (106) is provided. The micromixer includes a fuel plenum (124), an air plenum (126), and a plurality of mixing tubes (130). Certain mixing tube(s) (150) include a body portion (160) made of a first material and including a first end and a second end, the first end in fluid communication with the fuel and air plenums. A cladded tip portion (170) made of a second, different material is coupled to the second end of the body portion. The cladded tip portion includes a combustion end (172) configured to direct the fuel-air mixture into the combustion chamber. A tapered inner surface (180) extends from the combustion end of the cladded tip portion to a location (182) on the body portion. The body portion has a cylindrical inner diameter (ID1) from the location to the first end of the body portion.

## Description

### TECHNICAL FIELD

The disclosure relates generally to combustors. More specifically, the disclosure relates to methods of repairing damaged mixing tubes in a micromixer for a combustor and a related micromixer and combustor. The invention as herein claimed relates to the subject matter set forth in the appended claims.

### BACKGROUND

Combustors are used in a wide variety of applications to burn fuel with air. For example, gas turbine systems use combustors to generate power. In operation of a gas turbine system, air flows through a compressor and the compressed air is supplied to a combustion section. Specifically, the compressed air is supplied to a number of combustors each having a number of fuel nozzles, i.e., burners, which use the air in a combustion process with a fuel. The combustion section is in flow communication with a turbine section in which the combustion gas flow's kinetic and thermal energy is converted to mechanical rotational energy.

The combustors in the combustion section can each include a micromixer that includes a plurality of mixing tubes in which fuel and air are mixed. Each mixing tube is in fluid communication with air and fuel plenums at one end and in fluid communication with a combustion chamber of the combustor in which combustion occurs at an opposite end. Over time, the ends of the mixing tubes in fluid communication with the combustion chamber can become damaged, e.g., oxidized, so they do not work as efficiently as initially intended. Current approaches to repair mixing tubes typically replace an entirety of a mixing tube, removing them where they interact with air and fuel plenums and replacing them. This process can be very challenging and tedious due to the close proximity in which the mixing tubes are arranged. The replacement of all the mixing tubes is also very expensive, requires discarding large amounts of material (e.g., parts of the mixing tubes that are not damaged), and requires a readily available supply of new, replacement mixing tubes.

### BRIEF DESCRIPTION

The invention as herein claimed is set forth in the appended claims. Aspects, examples and features of the subject matter, whether claimed or not, are described below All aspects, examples and features mentioned below can be combined in any technically possible way.

An aspect of the disclosure provides a micromixer for combusting a fuel-air mixture in a combustion chamber of a combustor, the micromixer comprising: a fuel plenum; an air plenum; a plurality of mixing tubes in fluid communication with the fuel plenum, the air plenum and the combustion chamber, wherein the plurality of mixing tubes include at least one first mixing tube including: a body portion made of a first material and including a first end and a second end, the first end in fluid communication with the fuel plenum and the air plenum. The first end in fluid communication with the fuel plenum and the air plenum shall be construed such that the first end is fluidly connected to the fuel plenum and the air plenum and/or the first end is configured as an inlet end of the first mixing tube which is configured to receive fluid from the fuel plenum and the air plenum into the at least one first mixing tube. The at least one first mixing tube further comprises a cladded tip portion made of a second material different than the first material and coupled to the second end of the body portion, the cladded tip portion including a combustion end configured to discharge a fuel-air mixture from the at least one first mixing tube. The fuel-air mixture in particular is a fuel-air mixture resulting from air from the air plenum and fuel from the fuel plenum being received through the first end of the body portion and mixed inside the at least one first mixing tube. The combustion end may in aspects be configured to discharge and/or direct the fuel-air mixture into the combustion chamber. The at least one first mixing tube further includes a tapered inner surface extending from the combustion end of the cladded tip portion to a taper/cylinder transition location on the body portion, wherein the body portion has a cylindrical inner diameter from the taper/cylinder transition location to the first end of the body portion. The taper/cylinder transition location is hereinafter also referred to as "the location". More in particular, it may be provided that the tapered inner surface portion of the first mixing tube has an inner cross-section widening from the taper/cylinder transition location to the combustion end, or, tapering from the combustion end to the taper/cylinder transition location.

Another aspect of the disclosure includes any of the preceding aspects, and the plurality of mixing tubes further include at least one second mixing tube, each second mixing tube made of the first material and including: a first end in fluid communication with the fuel plenum and the air plenum. The first end in fluid communication with the fuel plenum and the air plenum shall be construed such that the first end of each second mixing tube is fluidly connected to the fuel plenum and the air plenum and/or the first end of each second mixing tube is configured as an inlet end of the respective second mixing tube which is configured to receive fluid from the fuel plenum and the air plenum into the respective second mixing tube. Further, each second mixing tube comprises a second end configured to discharge a fuel-air mixture from the respective second mixing tube. The fuel-air mixture in particular is a fuel-air mixture resulting from air from the air plenum and fuel from the fuel plenum being received through the first end of respective second mixing tube and mixed inside the respective second mixing tube. The combustion end may in aspects be configured to discharge and/or direct the fuel-air mixture into the combustion chamber.A cylindrical inner diameter extends along an entirety of a length between the first end and the second end of each second mixing tube. The at least one first mixing tube and the at least one second mixing tube have identical lengths.

Another aspect of the disclosure includes any of the preceding aspects, and the tapered inner surface has an angle in a range of 0.1° to 10° relative to a cylindrical inner surface of the body portion of the at least one first mixing tube. In more particular aspects, the tapered inner surface may have an angle in a range of 0.1° to 5° or in a range of 0.1° to 2° relative to a cylindrical inner surface of the body portion of the at least one first mixing tube

Another aspect of the disclosure includes any of the preceding aspects, and the tapered inner surface has an angle in a range of 0.1° to 5° relative to the cylindrical inner surface of the body portion of the at least one first mixing tube.

Another aspect of the disclosure includes any of the preceding aspects, and the tapered inner surface has an angle in a range of 0.1° to 2° relative to the cylindrical inner surface of the body portion of the at least one first mixing tube.

Another aspect of the disclosure includes any of the preceding aspects, and the tapered inner surface has a length in a range of 5 to 50 millimeters from the combustion end of the cladded tip portion to the location on the body portion. Any length herein specified with respect to the tapered inner surface may be construed as a length measured along an axis of the tube in the region having a tapered surface, i.e. an axial length of the respective tapered inner surface or tapered inner surface portion.

Another aspect of the disclosure includes any of the preceding aspects, and the cladded tip portion constitutes 10-75% of the length of the tapered inner surface and the body portion constitutes a remainder of the length of the tapered inner surface, i.e., the remainder of the length of the tapered inner surface is provided in the body portion.. For instance, the cladded tip portion may constitute 60-75% of the length of the tapered inner surface.

Another aspect of the disclosure includes any of the preceding aspects, and the cladded tip portion constitutes 75% of the length of the tapered inner surface and the body portion constitutes 25% of the length of the tapered inner surface, i.e., 25% of the length of the tapered inner surface are provided in the body portion.

Another aspect of the disclosure includes any of the preceding aspects, and the cladded tip portion constitutes 60% of the length of the tapered inner surface and the body portion constitutes 40% of the length of the tapered inner surface, i.e., 40% of the length of the tapered inner surface are provided in the body portion.

Another aspect of the disclosure includes any of the preceding aspects, and a difference between the cylindrical inner diameter of the body portion and an inner diameter of the combustion end of the cladded tip portion is no more than 530 micrometers.

Another aspect of the disclosure includes any of the preceding aspects, and the body portion of the at least one first mixing tube includes a circular end surface, and wherein the cladded tip portion of the at least one first mixing tube is fixedly coupled to the circular end surface.

Another aspect of the disclosure includes any of the preceding aspects, and the second material has a different oxidation resistance than the first material.

Another aspect of the disclosure includes a combustor including at least one micromixer of any of the preceding aspects.

Another aspect of the disclosure includes a method comprising: for a micromixer including at least one damaged mixing tube amongst a plurality of mixing tubes includes a first material, having a cylindrical inner diameter and extending from a first end at least one of an air plenum and a fuel plenum to a second end at a combustion chamber of a combustor: removing a damaged portion from the second end of the at least one damaged mixing tube, leaving a body portion of the at least one damaged mixing tube with a circular end surface; cladding a cladded tip portion onto the circular end surface of the body portion of the at least one damaged mixing tube, the cladded tip portion including a second material different than the first material and a combustion end opposite the circular end surface of the body portion; identifying a centerline of the body portion of the at least one damaged mixing tube; forming a vibration dampening material around a portion of the plurality of mixing tubes; based on the centerline of the body portion of the at least one damaged mixing tube, forming a tapered inner surface extending from the combustion end of the cladded tip portion to a location on the body portion of the at least one damaged mixing tube; and removing the vibration dampening material. In another aspect, the method may be a method of repairing a micromixer including at least one damaged mixing tube amongst a plurality of mixing tubes which includes a first material, having a cylindrical inner diameter and extending from a first end at least one of an air plenum and a fuel plenum to a second end, the method comprising removing a damaged portion from the second end of the at least one damaged mixing tube, leaving a body portion of the at least one damaged mixing tube with a circular end surface, cladding a cladded tip portion onto the circular end surface of the body portion of the at least one damaged mixing tube, the cladded tip portion including a second material different than the first material and a combustion end opposite the circular end surface of the body portion, identifying a centerline of the body portion of the at least one damaged mixing tube, forming a vibration dampening material around a portion of the plurality of mixing tubes, based on the centerline of the body portion of the at least one damaged mixing tube, forming a tapered inner surface extending from the combustion end of the cladded tip portion to a location on the body portion of the at least one damaged mixing tube; and removing the vibration dampening material. Forming a tapered inner surface extending from the combustion end of the cladded tip portion to a location on the body portion of the at least one damaged mixing tube based on the centerline of the body portion of the at least one damaged mixing tube may include forming a tapered inner surface extending from the combustion end of the cladded tip portion to a location on the body portion of the at least one damaged mixing tube coaxially with the cylindrical inner diameter centerline of the body portion of the at least one damaged mixing tube. More in particular, it may be provided that the tapered inner surface portion is formed to have inner cross-section widening from the taper/cylinder transition location to the combustion end, or, tapering from the combustion end to the taper/cylinder transition location.

Another aspect of the disclosure includes any of the preceding aspects, and further comprising machining the combustion end of the cladded tip portion of each of the at least one damaged mixing tube so the plurality of mixing tubes have substantially identical lengths, and machining an exterior surface of the cladded tip portion to smooth the exterior surface.

Another aspect of the disclosure includes any of the preceding aspects, and the tapered inner surface has an angle in a range of 0.1° to 2° relative to a cylindrical inner surface of the body portion of the at least one damaged mixing tube.

Another aspect of the disclosure includes any of the preceding aspects, where forming the vibration dampening material around a portion of the plurality of mixing tubes includes encasing the portion of the plurality of mixing tubes in a wax, and removing the vibration dampening material includes melting the wax.

Another aspect of the disclosure includes any of the preceding aspects, and identifying the centerline of the body portion of the at least one damaged mixing tube includes inserting a probe into the body portion farther than the circular end surface where the cladded tip portion is coupled to the body portion, and identifying the centerline of the body portion using the probe.

Another aspect of the disclosure includes a micromixer for combusting a fuel-air mixture in a combustion chamber of a combustor, the micromixer comprising: a fuel plenum; an air plenum; a plurality of mixing tubes in fluid communication with the fuel plenum and the air plenum and extending to the combustion chamber, wherein the plurality of mixing tubes include at least one first mixing tube including: a body portion made of a first material and including a first end and a second end, the first end in fluid communication with the fuel plenum and the air plenum; and a cladded tip portion made of a second material different than the first material and coupled to the second end of the body portion, the cladded tip portion including a combustion end configured to direct the fuel-air mixture into the combustion chamber, and wherein the body portion has a cylindrical inner diameter and the cladded tip portion has an inner diameter at the combustion end thereof larger than the cylindrical inner diameter of the body portion.

Another aspect of the disclosure includes any of the preceding aspects, and the plurality of mixing tubes further include at least one second mixing tube, each second mixing tube made of the first material and including: a first end in fluid communication with the fuel plenum and the air plenum, a second end configured to direct the fuel-air mixture into the combustion chamber, and the cylindrical inner diameter along an entirety of a length between the first end and the second end thereof, wherein the at least one first mixing tube and the at least one second mixing tube have identical lengths.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 is a schematic of an illustrative gas turbine system that can employ a micromixer and/or combustor according to embodiments of the disclosure;
FIG. 2 is a perspective view of a micromixer, according to according to embodiments of the disclosure;
FIG. 3A is a perspective view of a center fuel nozzle of a micromixer including a plurality of mixing tubes, according to embodiments of the disclosure;
FIG. 3B is a perspective view of an outer fuel nozzle of a micromixer including a plurality of mixing tubes, according to embodiments of the disclosure;
FIG. 4 is a cross-sectional view of a portion of a micromixer, according to embodiments of the disclosure;
FIG. 5 is a cross-sectional view of an unrepaired mixing tube, according to embodiments of the disclosure;
FIG. 6 is a cross-sectional view of a repaired mixing tube, according to embodiments of the disclosure;
FIG. 7 is a perspective view of a damaged mixing tube upon which a method according to embodiments of the disclosure may be applied;
FIG. 8 is a perspective view of a removing a damaged portion form a damaged mixing tube, according to embodiments of the disclosure may be applied;
FIG. 9A is a perspective view of cladding a cladded tip portion onto a circular end surface of a body portion of damaged mixing tube(s), according to embodiments of the disclosure;
FIG. 9B is a cross-sectional view of cladding a cladded tip portion onto a circular end surface of a body portion of damaged mixing tube(s), according to embodiments of the disclosure;
FIG. 10 shows a perspective view of an illustrative fuel nozzle of bundled mixing tubes including a vibration dampening material, according to embodiments of the disclosure; and
FIGS. 11A-C show cross-sectional views of forming a tapered inner surface in a cladded tip portion and a body portion of a repaired mixing tube, according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current technology, it will become necessary to select certain terminology when referring to and describing relevant machine components within the illustrative application of a combustor. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the turbomachine or, for example, the flow of air through the combustor or coolant through one of the turbomachine's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor end of the turbomachine, and "aft" referring to the rearward or turbine end of the turbomachine.

It is often required to describe parts that are at different radial positions with regard to a center axis. The term "axial" refers to movement or position parallel to an axis, e.g., an axis of a mixing tube. The term "radial" refers to movement or position perpendicular to an axis, e.g., an axis of a mixing tube. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. Finally, the term "circumferential" refers to movement or position around an axis, e.g., a circumferential interior surface of mixing tube. As indicated above, it will be appreciated that such terms may be applied in relation to the axis of the turbomachine.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure provide a micromixer for combusting a fuel-air mixture in a combustion chamber of a combustor, a related combustor and a method of repairing a mixing tube. The micromixer includes a fuel plenum, an air plenum, and a plurality of mixing tubes in fluid communication with the fuel plenum, the air plenum and the combustion chamber. The plurality of mixing tubes include at least one mixing tube that has been repaired. The repaired mixing tube(s) include a body portion made of a first material and including a first end and a second end. The first end is in fluid communication with the fuel plenum and the air plenum. The repaired mixing tubes include a cladded tip portion made of a second material different than the first material and coupled to the second end of the body portion. The cladded tip portion includes a combustion end configured to direct the fuel-air mixture into the combustion chamber. The repaired mixing tubes also include a tapered inner surface extending from the combustion end of the cladded tip portion to a location on the body portion. The body portion of the repaired mixing tube(s) have a cylindrical inner diameter from the location to the first end of the body portion. In this manner, the cladded tip portion has an inner diameter at the combustion end thereof larger than the cylindrical inner diameter of the body portion. The cladded tip portion of the repaired mixing tubes has better oxidation resistance than the original mixing tube to lengthen the life of the repaired mixing tubes. A method of repair is also provided. The method provides a shorter repair time compared to conventional processes and can reduce costs by a large margin by not removing and scrapping undamaged parts of the mixing tubes. The method also reduces the need for, or otherwise does not require, a ready-available supply of difficult-to-source mixing tubes.

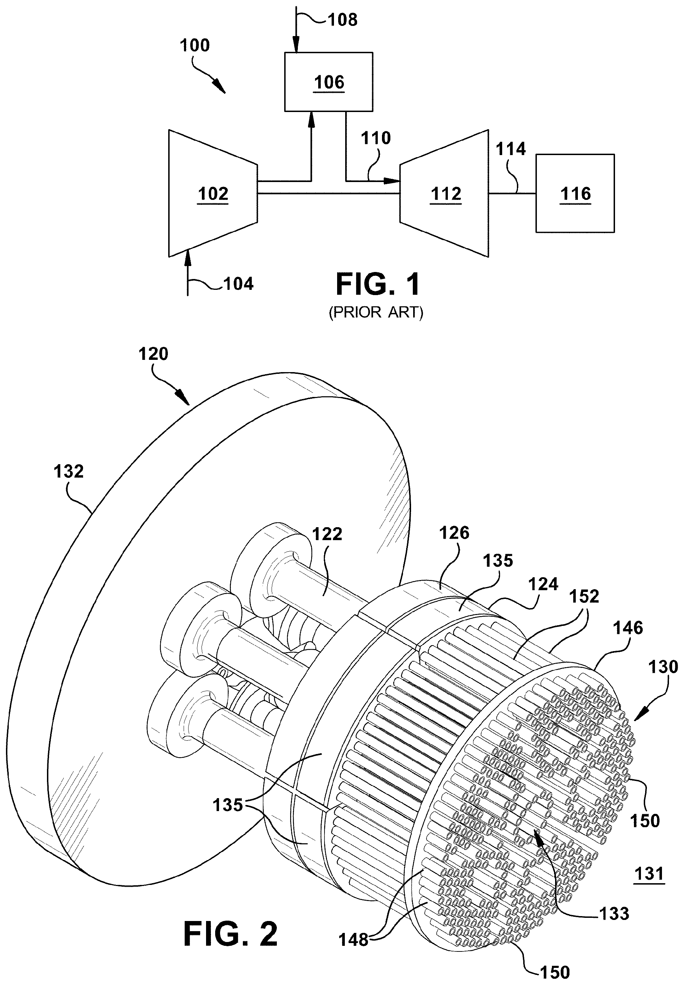

Illustrative embodiments are directed to, among other things, micromixers for a combustor for a gas turbine system. FIG. 1 shows a schematic view of a gas turbine (GT) system 100 that may employ combustor(s) using micromixer(s) according to embodiments of the disclosure. As is known, GT system 100 may include a compressor 102 that compresses an incoming flow of air 104. Compressor 104 delivers the compressed flow of air 104 to a combustor 106. Combustor 106 mixes the compressed flow of air 104 with a pressurized flow of fuel 108 and ignites the mixture to create a flow of combustion gases 110. Although only a single combustor 106 is shown, GT system 100 may include any number of combustors 106. Flow of combustion gases 110 is in turn delivered to a turbine 112. Flow of combustion gases 110 drives turbine 112 so as to produce mechanical work. The mechanical work produced in turbine 112 drives compressor 102 via a shaft 114 and an external load 116 such as an electrical generator and the like.

GT system 100 may use natural gas, various types of syngas, and/or other types of fuels. GT system 100 may be any one of a number of different gas turbine engines offered by GE Vernova of Cambridge, MA, USA, including but not limited to a 7 or a 9 series heavy duty gas turbine engine and the like. Different configurations of GT system 100 may also benefit from the teachings of the disclosure. Other types of GT systems also benefit from the teachings herein. Multiple GT systems, other types of turbines, and other types of power generation equipment also may be benefit from the teachings of the disclosure.

FIGS. 2, 3A-B and 4 depict a component of combustor(s) 106 in FIG. 1; specifically, a micromixer 120 or a portion thereof. Micromixer 120 is part of combustor(s) 106. Micromixer 120 may include a fuel plenum 124, an air plenum 126 and a plurality of mixing tubes 130 in fluid communication with fuel plenum 124, air plenum 126 and a combustion chamber 131 of combustor 106. Related operative structure to fuel plenum 124, air plenum 126 and mixing tubes 130 will now be described. It is emphasized that related structure is merely illustrative and micromixer 120 may include a variety of different arrangements of related operative structure, all of which are considered within the scope of the disclosure.

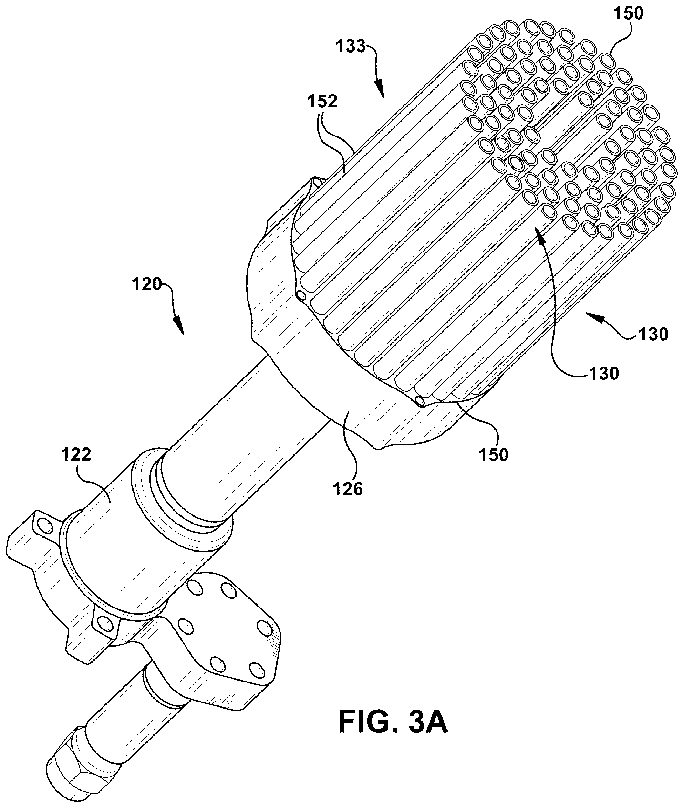

Continuing with the description, micromixer 120 may include a base nozzle structure 122 in communication with fuel plenum 124, air plenum 126, and numerous mixing tubes 130 forming one or more segmented mixing tube bundles or fuel nozzles (FIGS. 3A-B). Base nozzle structure 122 supplies a fuel to fuel plenum 124. The fuel exits fuel plenum 124 and enters mixing tubes 130. Air is directed into mixing tubes 130 through air plenum 126, e.g., via air intake (plate) 138, and mixes with the fuel to create a fuel-air mixture. The fuel-air mixture exits mixing tubes 130 and enters into a downstream combustion chamber 131, where it is combusted in a known fashion for use in turbine 112 (FIG. 1).

Still referring to FIGS. 2 and 3A-B, micromixer 120 may be segmented, meaning the micromixer 120 may include a number of bundles of mixing tubes 130, referenced herein as fuel nozzles 133, 135, supported by a base nozzle structure 122. That is, in the segmented micromixer 120, each fuel nozzle 133, 135 includes a bundle of mixing tubes 130. Each bundle of mixing tubes 130 are at least partially supported by base nozzle structure 122. Base nozzle structures 122 may be attached to a combustion end cover 132 (FIG. 2).

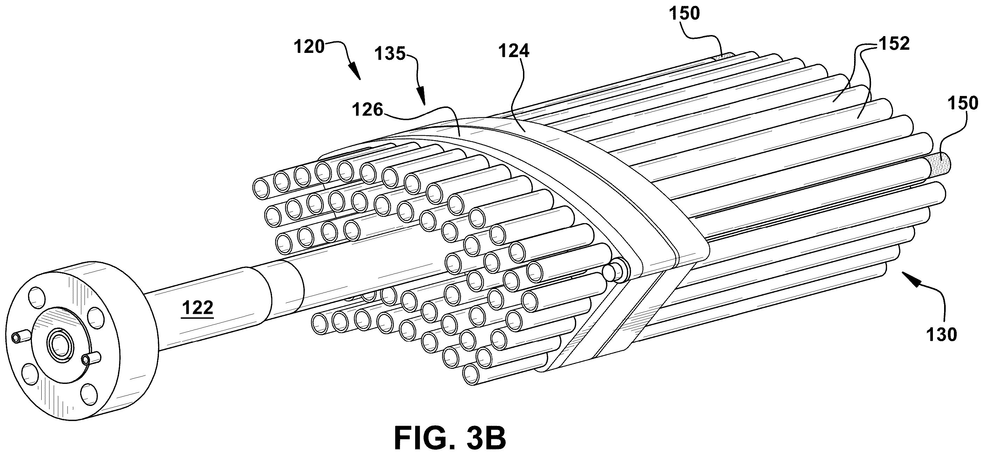

FIGS. 3A and 3B are perspective views of bundles of mixing tubes 130 separated from micromixer 120 (FIG. 2), i.e., fuel nozzles 133, 135. FIG. 3A shows a center fuel nozzle 133 separated from micromixer 120 (FIG. 2), and FIG. 3B shows one outer fuel nozzle 135 separated from micromixer 120 (FIG. 2). In FIG. 2, a center fuel nozzle 133, i.e., bundle of mixing tubes 130 with respective base nozzle structure 122, is surrounded by a plurality (in this case, perhaps five) outer fuel nozzles 135, i.e., bundles of mixing tubes 130 with respective base nozzle structure 122. Each outer fuel nozzle 135 has a truncated wedge shape, such that outer fuel nozzles 135 may be positioned in close proximity to center fuel nozzle 133 and cover a majority of the head end area. Each fuel nozzle 133, 135 includes a plurality of mixing tubes 130 that are part of each respective fuel nozzle 133, 135 and may extend through, as shown in FIG. 2, an end cap assembly (plate) 146. In one non-limiting example, center fuel nozzle 133 may have approximately 60 mixing tubes 130, and each outer fuel nozzle 135 may have approximately 80 mixing tubes 130. That stated, it should be noted that the specific size, spacing, and number of mixing tubes 130 shown in FIGS. 2-4 is intended to be representative, and fuel nozzles 133, 135 should not be construed as limiting the disclosure in terms of mixing tube size, spacing, or number other than described herein.

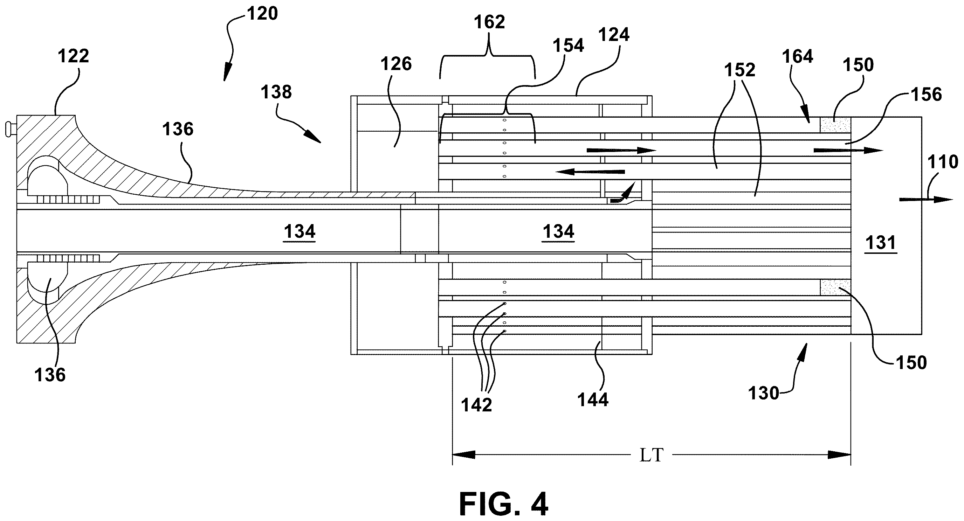

As depicted in FIG. 4, micromixer 120 may include base nozzle structure 122 having coaxial tubes including an inner tube 134 and an outer tube 136. Outer tube 136 of the coaxial tubes supplies a fuel to mixing tubes 130. In certain embodiments, inner tube 134 of the coaxial tubes supplies a liquid cartridge or blank to combustion chamber 131. In other embodiments, the inner tube 134 of the coaxial tube may include an igniter or flame detector. One will appreciate, however, that inner tube 134 of the coaxial tubes may include a variety of combustor components. Air intake (plate) 138 is disposed upstream of mixing tubes 130 and supplies air to the mixing tubes 130, i.e., to air plenum 126. In certain embodiments, an air conditioner plate (not shown) may be disposed upstream of mixing tubes 130. The fuel supplied by outer tube 136 of the coaxial tubes enters fuel plenum 124 before entering mixing tubes 130. In certain embodiments, the fuel entering fuel plenum 124 is redirected 180° (as indicated by the dashed arrows at the end of outer tube 136) before entering the mixing tubes 130 through one or more holes 142 in mixing tubes 130. In other embodiments, the fuel enters fuel plenum 124 directly without being redirected. In certain embodiments, a fuel conditioning plate 144 is disposed within fuel plenum 124. In other embodiments, fuel plenum 124 does not include fuel conditioning plate 144. The air/fuel mixture exits mixing tubes 130 (as indicated by the solid arrow within mixing tubes 130) into combustion chamber 131 where it is combusted to form flow of combustion gases 110 (FIGS. 1 and 3).

Base nozzle structure 122 of each fuel nozzle 133, 135 of micromixer 120 provides both structural support and outer tube 136 for the fuel to enter fuel plenum 124. As stated above, the fuel can be gas. Inner tube 134 may include a liquid cartridge (for dual fuel), a blank cartridge (for gas only), an igniter, a flame detector, or any other combustor component. Base nozzle structure 122 is attached to air intake (plate) 138 of air plenum 126 of micromixer 120. The fuel is injected from end cover 132 (FIG. 2) into base nozzle structure 122 and flows through the annulus formed between inner tube 134 and outer tube 136 into fuel plenum 124. The fuel then enters mixing tube holes 142 where it is mixed with head end air. The head end air flows through flow conditioning plate (not shown) and into mixing tube 130.

In an operative state, micromixer 120 may include end cap assembly 146 disposed about each of the segmented mixing tube 130 bundles. End cap assembly 146 may include a cap face (not labeled) having a number of apertures 148 for corresponding segmented mixing tube 130 bundles to pass through. End cap assembly 146 may provide additional support to the segmented mixing tube 130 bundles. In certain embodiments, end cap assembly 146 may be removable from the segmented mixing tube 130 bundles such that during maintenance, end cap assembly 146 may be removed and segmented mixing tube 130 bundles may be repaired, as described herein, and end cap assembly 146 put back on. In other embodiments, end cap assembly 146 may be removably attached to some other support structure (not shown) encompassing micromixer 120.

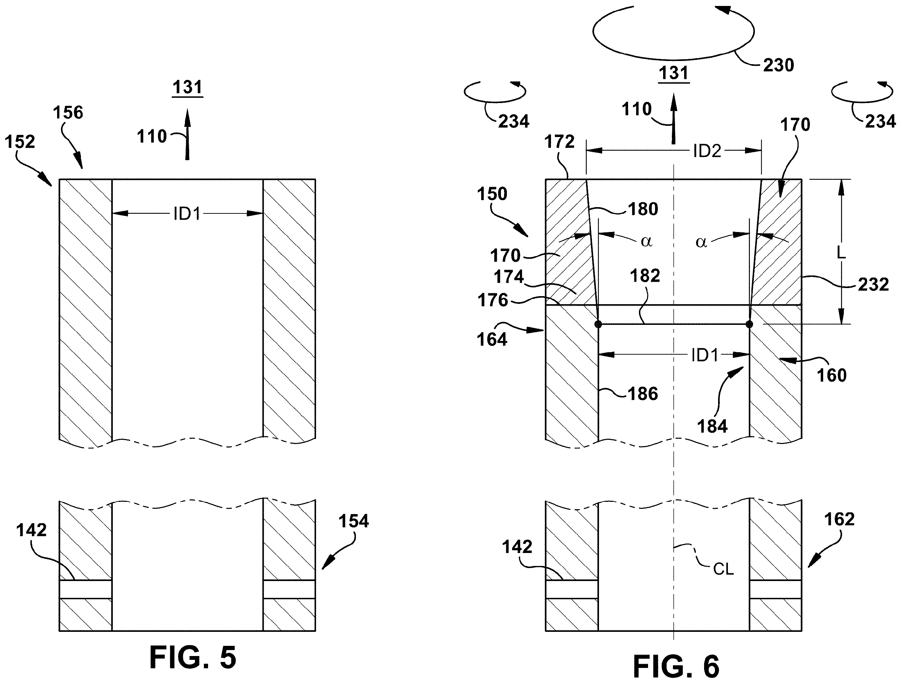

As noted, micromixer 120 includes plurality of mixing tubes 130. In accordance with embodiments of the disclosure, plurality of mixing tubes 130 include at least one repaired (first) mixing tube 150 that has been repaired according to a method, described herein. In certain embodiments, micromixer 120 may also include at least one unrepaired (second) mixing tube 152. FIG. 5 shows a cross-sectional view of an unrepaired mixing tube 152, and FIG. 6 shows a cross-sectional view of a repaired mixing tube 150, according to embodiments of the disclosure.

While a particular upstream structure of micromixer 120 and fuel nozzles 133, 135 has been provided, it is emphasized that micromixers 120 can have a variety of different arrangements upstream from mixing tubes 130 to provide air and fuel to mixing tubes 130 and the teachings of the disclosure are not limited to the previously described illustrative arrangement.

Referring to FIGS. 4 and 5, unrepaired mixing tube(s) 152 are made of a first material in their entirety. The first material may include any now known or later developed material capable of withstanding the high temperature environment in which mixing tubes 130 are used, including but not limited to Haynes 188. Unrepaired mixing tube(s) 152 include a first, fuel/air intake end 154 in fluid communication with fuel plenum 124 and air plenum 126, and, as shown in FIGS. 4 and 5, a second, combustion end 156 configured to direct combustion gases 110 into combustion chamber 131. Unrepaired mixing tube(s) 152 also include a cylindrical inner diameter D1 along an entirety of a length between first fuel/air intake end 154 and second, combustion end 156 thereof. Cylindrical inner diameter ID1 is consistent along the length of unrepaired mixing tube(s) 152 between first fuel/air intake end 154 and second, combustion end 156 thereof.

Referring to FIGS. 4 and 6, in accordance with embodiments of the disclosure, as noted, plurality of mixing tubes 130 also includes repaired mixing tube(s) 150 that have been repaired according to a method, described herein. Repaired mixing tube(s) 150 include a body portion 160 made of the first material, e.g., Haynes 188. That is, body portion 160 of repaired mixing tube(s) 150 includes the same material as unrepaired mixing tube(s) 152. Body portion 160 includes a first end 162 and a second end 164. As shown in FIG. 4, first end 162 of body portion 160 is in fluid communication with fuel plenum 124 and air plenum 126. However, second end 164 of body portion 160 of repaired mixing tube(s) 150 is not at the same location as second, combustion end 156 of unrepaired mixing tube(s) 152. Rather, in contrast to unrepaired mixing tube(s) 152, repaired mixing tube(s) 150 include a cladded tip portion 170 coupled to second end 164 of body portion 160 that has replaced a damaged portion of the previously unrepaired mixing tube 152. Cladded tip portion 170 is generally tubular and, as will be described further herein, has a similar, but typically slightly larger outer diameter than body portion 160 when formed. Cladded tip portion 170 is made of a second material different than the first material. The second material may include any now known or later developed material capable of withstanding the high temperature environment in which mixing tubes 130 are used. However, in accordance with embodiments of the disclosure, the second material has a different oxidation resistance than the first material and has a relative close coefficient of thermal expansion at operating temperatures. The second material may include but is not limited to Haynes 233, which has an oxidation resistance that is multiple times that of the first material, e.g., Haynes 188. Other options may include other nickel-based alloys and/or Hastalloys^{®}. In this manner, repaired mixing tube(s) 150 may have a longer life span compared to unrepaired mixing tube(s) 152.

Cladded tip portion 170 includes a combustion end 172 configured to direct fuel-air mixture into combustion chamber 131. Cladded tip portion 170 also includes an opposing end 174 opposed to combustion end 172 coupled to a circular end surface 176 of second end 164 of body portion 160. More particularly, body portion 160 of repaired mixing tube(s) 150 includes circular end surface 176, and cladded tip portion 170 of repaired mixing tube(s) 150 is fixedly coupled, e.g., via laser cladding, to circular end surface 176.

Repaired mixing tube(s) 150 also includes a tapered inner surface 180 extending from combustion end 172 of cladded tip portion 170 to a location 182 on body portion 160. More particularly, location 182 on body portion 160 is on an inner surface 184 of body portion 160 such that tapered inner surface 180 extends into or includes part of inner surface 184 of body portion 160. Otherwise, body portion 160 has cylindrical inner surface 186 having cylindrical inner diameter ID1 from location 182 to first end 162 of body portion 160, i.e., like unrepaired mixing tube(s) 152. Tapered inner surface 180 smooths a surface transition between cladded tip portion 170 and body portion 160 of repaired mixing tube(s) 150.

It is noted that tapered inner surface 180, as shown in FIG. 6, is exaggerated for illustration purposes, and has a relatively small angle relative to cylindrical inner surface 186 (or centerline CL) of body portion 160 of repaired mixing tube(s) 150. In certain embodiments, tapered inner surface 180 may have an angle α in a range of 0.1° to 10° relative to cylindrical inner surface 186 (or centerline CL) of body portion 160 of repaired mixing tube(s) 150. In other embodiments, tapered inner surface 180 may have an angle α in a range of 0.1° to 5° relative to cylindrical inner surface 186 (or centerline CL) of body portion 160 of repaired mixing tube(s) 150. In other embodiments, tapered inner surface 180 may have an angle α in a range of 0.1° to 2° relative to cylindrical inner surface 186 (or centerline CL) of body portion 160 of repaired mixing tube(s) 150. As a consequence of tapered inner surface 180, as shown in FIG. 6, a difference between cylindrical inner diameter ID1 of body portion 160 (and unrepaired mixing tube(s) 152) and an inner diameter ID2 of combustion end 172 of cladded tip portion 170 is relatively small. In certain embodiments, the difference may be no more than 530 micrometers (0.021 inches).

As shown in FIG. 6, tapered inner surface 180 has a length L from second, combustion end 172 of cladded tip portion 170 to location 182 on body portion 160. Length L may be in a range of 5 to 50 millimeters from combustion end 172 of cladded tip portion 170 to location 182 on body portion 160. The extents to which inner surfaces of cladded tip portion 170 and body portion 160 constitute length L can be user defined. That is, percentages of length L of tapered inner surface 180 that cladded tip portion 170 and body portion 160 constitute can be user selected based on, as will be described herein, a depth of the tool used to form tapered inner surface 180. In certain embodiments, cladded tip portion 170 constitutes 10-75% of length L of tapered inner surface 180 and body portion 160 constitutes a remainder of the length L of tapered inner surface 180. In certain embodiments, cladded tip portion 170 constitutes 50% of length L of tapered inner surface 180 and body portion 160 constitutes 50% of length L of tapered inner surface 180. In other embodiments, cladded tip portion 170 constitutes 75% of length L of tapered inner surface 180 and body portion 160 constitutes 25% of length L of tapered inner surface 180. In other embodiments, cladded tip portion 170 constitutes 60% of length L of tapered inner surface 180 and body portion 160 constitutes 40% of length L of tapered inner surface 180. Other relative percentages of length L may also be used.

Despite the repair, as shown in FIG. 4, repaired mixing tube(s) 150 and unrepaired mixing tube(s) 152 have identical lengths LT, i.e., within manufacturing tolerances. In other words, second, combustion ends 156 of unrepaired mixing tube(s) 152 and combustion ends 172 of repaired mixing tube(s) 150 (of cladded tip portion 170) are coplanar.

Embodiments of the disclosure also include a combustor 106 (FIG. 1) including at least one micromixer 120 (FIG. 2) as described herein. As the structure of combustors 106 are otherwise well known and can vary depending on, for example, application no other details are required for understanding by those with skill in the art.

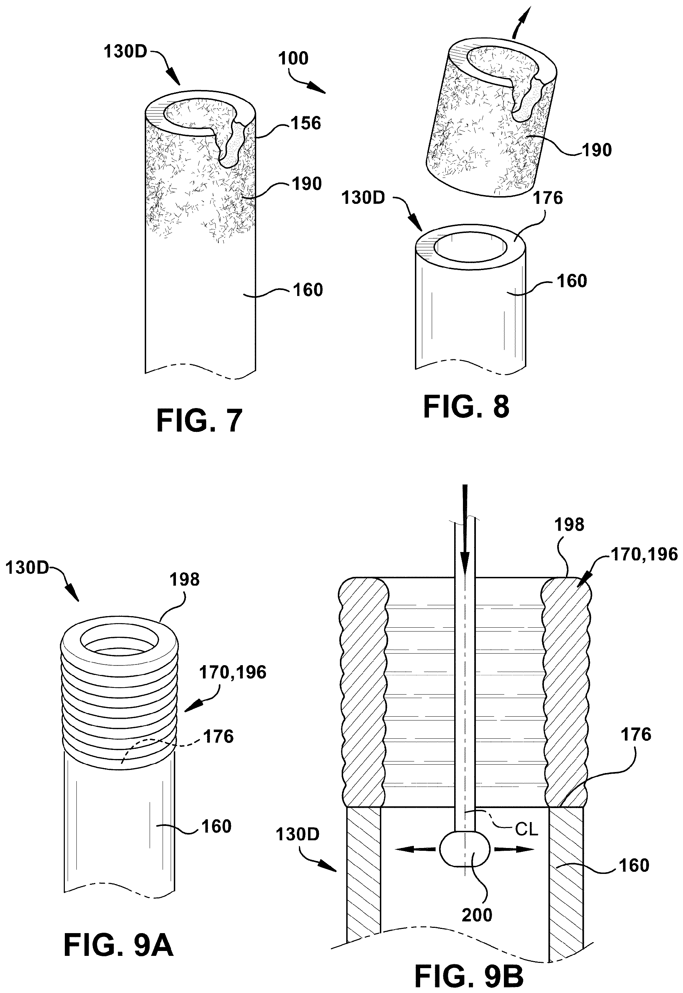

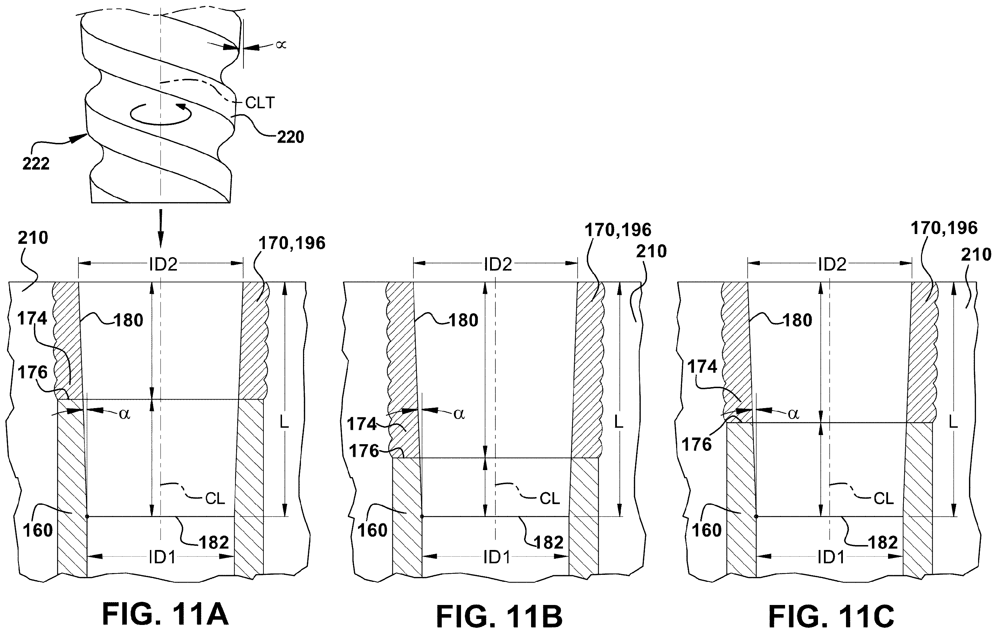

Referring to FIGS. 7-11C, a method and, more specifically, a method for repairing a micromixer 120 (FIG. 2), according to embodiments of the disclosure will now be described. While FIGS. 7-11C may show individual mixing tubes 130, it is noted that the method is advantageously applied to micromixer 120 with fuel nozzles 133, 135 (FIGS. 2-4) disassembled from a combustor 106 (FIG. 1), but with mixing tubes 130 still generally assembled as fuel nozzles 133, 135 (FIGS. 2-4). In this case, as understood in the field, and as shown in FIGS. 2-4 and 10, base nozzle structure 122, air plenum 126, fuel plenum 124 (FIG. 2, 4 and 10) and/or other structure maintains the segmented bundles of mixing tubes 130 in an assembled manner. However, any number of mixing tubes 130 can be repaired at the same time according to embodiments of the disclosure. As shown in FIG. 7, the method is applicable to a micromixer including at least one damaged mixing tube 130D (FIG. 7) amongst a plurality of mixing tubes, e.g., mixing tubes 130 (FIGS. 2-4). Mixing tubes 130 include any first material previously listed herein e.g., Haynes 188, in their entirety, i.e., from, as shown in FIGS. 4 and 5, first fuel/air intake end 154 to second, combustion end 156 thereof. Mixing tubes 130 have cylindrical inner diameter ID1 extending from first fuel/air intake end 154 at, for example, air plenum 126 to second, combustion end 156 at combustion chamber 131 of combustor 106 (FIG. 1).

As shown in FIG. 7, mixing tubes 130 of micromixer 120 (FIG. 4) may be inspected to identify which mixing tubes 130 are damaged, resulting in at least one damaged mixing tube 130D being identified. The inspection may include any now known or later developed manner of inspection mixing tubes 130 such as but not limited to visual inspection, blue light inspection and/or thermographic analysis. As shown in FIG. 8, once a damaged mixing tube 130D is identified, the method includes removing a damaged portion 190 from second, combustion end 156 of damaged mixing tube(s) 130D, leaving body portion 160 of damaged mixing tube(s) 130D with a circular end surface 176 (tube end) of mixing tube 130D. Damaged portion 190 may be removed using any now known or later developed and appropriate machining techniques, such as but not limited to grinding and/or cutting. Damaged portion 190 removed from each damaged mixing tube 130D may be the same length, but this is not necessary in all cases as the extent of damage on each tube 130D may be different. Circular end surface 176 (tube end) of mixing tube 130D provides a clean, damage free surface upon which cladded tip portion 170 may be formed.

FIGS. 9A-B show a perspective view and a cross-sectional view, respectively, of cladding a cladded tip portion 170 onto circular end surface 176 of body portion 160 of damaged mixing tube(s) 130D. More particularly, layers 196 of cladded tip portion 170 are formed on, and fixed to, circular end surface 176 of body portion 160. Any number of layers 196 desired to extend cladded tip portion 170 to a desired extent can be formed, e.g., so it extends just at least slightly beyond second, combustion end 156 of unrepaired mixing tubes 152 (FIG. 5). Layers 196 of cladded tip portion 170 are generally tubular and take on a similar but perhaps slightly larger outer diameter and slightly smaller inner diameter than body portion 160 as they are formed. Layers 196 and cladded tip portion 170 include a second material different than first material. The second material may be any previously material listed herein, e.g., Haynes 233. As noted herein, (layers 196 of) cladded tip portion 170 may also include an end 198 opposite the circular end surface 176 of body portion 160. It will be recognized that end 198 may be longer than necessary and, as will be described, may be subsequently machined to length, i.e., to form combustion end 172 (FIG. 6) of repaired mixing tube(s) 150. The cladding process may include any now known or later developed metal or metal alloy forming technique capable of layering and fixing the second material onto circular end surface 176 of body portion 160. The cladding process may include but is not limited to: laser cladding, layered sequential welding, cold metal transfer, TIG welding, additive build up, friction welding, and 3D printing.

FIG. 9B also shows identifying a centerline CL of body portion 160 of damaged mixing tube(s) 130D. Identifying centerline CL of body portion 160 of damaged mixing tube(s) 130D may include, for each damaged tube 130D, inserting a probe 200 into body portion 160 farther than circular end surface 176 where (layers 196 of) cladded tip portion 170 are coupled to body portion 160, and identifying the centerline CL of body portion 160 using probe 200. Probe 200 may include any now known or later developed element for three-dimensional locating such as but not limited to a touch trigger probe or laser probe. Alternatively, identifying centerline CL of body portion 160 can be performed using any now known or later developed technique. As the systems and methods of identifying centerline CL of body portion 160 are otherwise well known in the field, no further details are necessary for understanding by those with skill in the art.

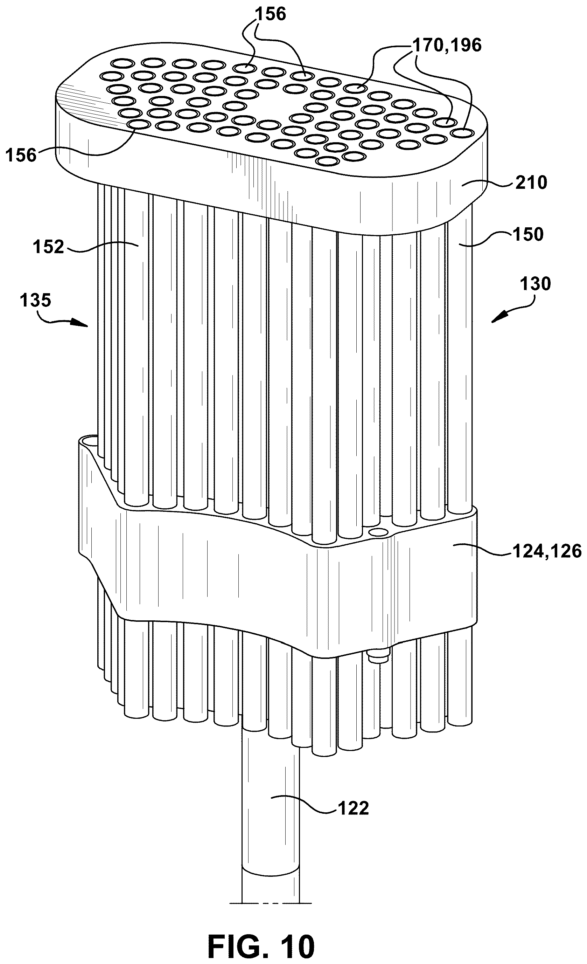

FIG. 10 shows a perspective view of an illustrative fuel nozzle, e.g., an outer fuel nozzle 135 undergoing mixing tube repair as previously described. FIG. 10 also shows forming a vibration dampening material 210 around a portion of mixing tubes 130. While FIG. 10 shows vibration dampening material 210 around all mixing tubes 130 on the particular nozzle, it may not be necessary to do so, i.e., it may only surround certain mixing tubes 130. As illustrated, the portion surrounded by vibration dampening material 210 may include second, combustion ends 156 (also, FIG. 5) of unrepaired mixing tube(s) 152 and (layers 196 of) cladded tip portion 170 (also, FIGS. 9A-B) of repaired mixing tubes 150. However, the portion may include any part of mixing tubes 130 capable of resisting vibrations when vibration dampening material 210 is present. In certain embodiments, forming vibration dampening material 210 around a portion of mixing tubes 130 includes encasing the portion of mixing tubes 130 in a wax. This process may include, for example, dipping the portion (e.g., ends 156, 198) of mixing tubes 130 in hot, melted wax and allowing the wax to harden around mixing tubes 130. Some subsequent wax removal, e.g., by cutting or melting, may be performed to arrive at the configuration in FIG. 10.

FIGS. 11A-C show cross-sectional views of forming tapered inner surface 180. Like FIG. 6, it is noted that tapered inner surface 180, as shown in FIGS. 11A-C is exaggerated for illustration purposes and has a relatively small angle relative to cylindrical inner surface 186 (or centerline CL) of body portion 160 of repaired mixing tube(s) 150. As shown in FIG. 11A, tapered inner surface 180 may be formed using any now known or later developed drilling and/or reaming technique, i.e., using a drilling or reaming tool bit 220. Tool bit 220 may include an outer side(s) 222 that forms tapered inner surface 180. For example, outer side or sides 222 of tool bit 220 may be angled or inclined to form tapered inner surface 180 (i.e., with angle α relative to a centerline CLT of tool bit 220) or may be straight (i.e., with parallel outer sides 222) but move in a tilted rotational path to form tapered inner surface 180. Depending on how many tool bits 220 are used at a single time, tapered inner surface 180 may be formed in one or more mixing tubes 130. It will be recognized by those with skill in the art that other techniques to form tapered inner surface 180 may be possible. During forming of tapered inner surface 180, vibration dampening material 210 resists vibration and prevents damage to mixing tubes 130.

As noted, in certain embodiments, tapered inner surface 180 may have an angle α in a range of 0.1° to 10° relative to cylindrical inner surface 186 (or centerline CL) of body portion 160 of repaired mixing tube(s) 150. In other embodiments, tapered inner surface 180 may have an angle α in a range of 0.1° to 5° relative to cylindrical inner surface 186 (or centerline CL) of body portion 160 of repaired mixing tube(s) 150. In other embodiments, tapered inner surface 180 may have an angle α in a range of 0.1° to 2° relative to cylindrical inner surface 186 (or centerline CL) of body portion 160 of repaired mixing tube(s) 150. In any event, forming tapered inner surface 180 removes the rough, bulbous inner ends of the layers 196 of cladded tip portion 170, as shown in FIGS. 9A-B, and forms a smooth transition between cladded tip portion 170 and cylindrical inner surface 186 of body portion 160.

The depth that tool bit 220 extends beyond layers 196 of cladded tip portion 170 and into body portion 160 determines the percentage of length L of tapered inner surface 180 provided by cladded tip portion 170 and body region 160. In certain embodiments, cladded tip portion 170 constitutes 10-75% of length L of tapered inner surface 180 and body portion 160 constitutes a remainder of length L of tapered inner surface 180. For example, in FIG. 11A, cladded tip portion 170 constitutes 50% of length L of tapered inner surface 180 and body portion 160 constitutes 50% of length L of tapered inner surface 180. In FIG. 11B, cladded tip portion 170 constitutes 75% of length L of tapered inner surface 180 and body portion 160 constitutes 25% of length L of tapered inner surface 180. In FIG. 11C, cladded tip portion 170 constitutes 60% of length L of tapered inner surface 180 and body portion 160 constitutes 40% of length L of tapered inner surface 180. Other relative percentages of length L may also be used. As a consequence of tapered inner surface 180 forming, as shown in FIG. 6, a difference between cylindrical inner diameter ID1 of body portion 160 (and unrepaired mixing tube(s) 152) and an inner diameter ID2 of combustion end 172 of cladded tip portion 170 is relatively small. In certain embodiments, the difference may be no more than 530 micrometers (0.021 inches). In any event, body portion 160 has cylindrical inner diameter ID1 and cladded tip portion 170 has inner diameter ID2 at combustion end 172 thereof larger than cylindrical inner diameter ID1 of body portion 160.

Returning to FIG. 6, the method may include a number of finishing steps. For example, the method may include removing vibration dampening material 210 (FIGS. 10, 11A-C) from repaired mixing tubes 150 and unrepaired mixing tubes 152 (FIG. 5). Removing vibration dampening material 210 (FIGS. 10, 11A-C) may include any now known or later developed manner of melting the wax, e.g., placing fuel nozzles in a furnace and exposing them to a temperature sufficient to melt the wax.

As also shown in FIG. 6, the method may further include machining combustion end 172 (arrow 230 of) cladded tip portion 170 of damaged mixing tube(s) 130D so the plurality of mixing tubes 130 have substantially identical lengths LT (see FIG. 4). This process may remove parts of end 198 (FIGS. 9A-B). Although not necessary in all cases, the machining ideally results in unrepaired mixing tube(s) 152 and repaired mixing tube(s) 150 have identical lengths LT (see FIG. 4). That is, cladded tip portion 170 is machined to a length so repaired mixing tube(s) 150 have the same length LT (FIG. 4) as unrepaired mixing tube(s) 152. As also shown in FIG. 6, the method may also include machining an exterior surface 232 (arrows 234) of cladded tip portion 170 to smooth the exterior surface 232, i.e., remove rough, bulbous outer ends of the layers 196 (FIGS. 9A-B) of cladded tip portion 170.

Embodiments of the disclosure provide various technical and commercial advantages, examples of which are discussed herein. The method provides a repaired mixing tube with a tip with better oxidation resistance than the original mixing tube. The method also provides a shorter repair time compared to conventional processes and can reduce costs by a large margin. The method also reduces the scrapping of parts and does not require a ready-available supply of difficult-to-source mixing tubes.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope of the herein claimed invention. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A micromixer (120) for providing a fuel-air mixture to a combustion chamber (131) of a combustor (106), the micromixer comprising:
a fuel plenum (124);
an air plenum (126);
a plurality of mixing tubes (130) in fluid communication with the fuel plenum, the air plenum and the combustion chamber, wherein the plurality of mixing tubes include at least one first mixing tube (150) including:
a body portion (160) made of a first material and including a first end (162) and a second end (164), the first end fluidly connected to the fuel plenum and the air plenum;
a cladded tip portion (170) made of a second material different than the first material and coupled to the second end of the body portion, the cladded tip portion including a combustion end (172) configured to discharge a fuel-air mixture from the at least one first mixing tube;
the at least one first mixing tube further including a tapered inner surface (180) extending from the combustion end of the cladded tip portion to a taper/cylinder transition location (182) on the body portion,
wherein the body portion of the at least one first mixing tube has a cylindrical inner diameter (ID1) from the taper/cylinder transition location to the first end of the body portion.

2. The micromixer of claim 1, wherein the plurality of mixing tubes (130) further include at least one second mixing tube (152), each second mixing tube made of the first material and including: a first end (154) fluidly connected to the fuel plenum (124) and the air plenum (126), a second end (156) configured to discharge a fuel-air mixture from the respective second mixing tube, wherein a cylindrical inner diameter extends along an entirety of a length between the first end and the second end of each second mixing tube,
wherein the at least one first mixing tube (150) and the at least one second mixing (152) tube have identical lengths (LT).

3. The micromixer of any preceding claim, wherein the tapered inner surface (180) of the at least one first mixing tube (150) has an angle in a range of 0.1° to 10° relative to a cylindrical inner surface of the body portion of the at least one first mixing tube.

4. The micromixer of any preceding claim, wherein the tapered inner surface (180) has a length (L) in a range of 5 to 50 millimeters from the combustion end (172) of the cladded tip portion to the taper/cylinder transition location (182) on the body portion.

5. The micromixer of any preceding claim, wherein the cladded tip portion (170) constitutes 10-75% of the length of the tapered inner surface and the body portion constitutes a remainder of the length of the tapered inner surface.

6. The micromixer of any preceding claim, wherein the cladded tip portion (170) constitutes 60% or more and 75% or less of the length of the tapered inner surface.

7. The micromixer of any preceding claim, wherein a difference between the cylindrical inner diameter (ID1) of the body portion of the at least one first mixing tube and an inner diameter (ID2) of the combustion end of the cladded tip portion of the at least one first mixing tube is no more than 530 micrometers.

8. The micromixer of any preceding claim, wherein the body portion (160) of the at least one first mixing tube (150) includes a circular second end surface (176), and wherein the cladded tip portion (170) of the at least one first mixing tube is fixedly coupled to the circular end surface.

9. The micromixer of any preceding claim, wherein the second material has a different oxidation resistance than the first material.

10. A combustor (106) including at least one micromixer (120) of any preceding claim, wherein the combustion end (172) of the cladded tip portion of the at least one first mixing tube (150) and the second ends (156) of each of the at least one second mixing tube (152) are configured to discharge a fuel-air mixture into a combustion chamber (131) of the combustor..

11. A method of repairing a micromixer including at least one damaged mixing tube amongst a plurality of mixing tubes (130) which includes a first material, having a cylindrical inner diameter and extending from a first end at least one of an air plenum (126) and a fuel plenum (124) to a second end:, the method comprising
removing a damaged portion (190) from the second end (156) of the at least one damaged mixing tube, leaving a body portion (160) of the at least one damaged mixing tube with a circular end surface (176);
cladding a cladded tip portion (170) onto the circular end surface of the body portion of the at least one damaged mixing tube, the cladded tip portion including a second material different than the first material and a combustion end opposite the circular end surface of the body portion;
identifying a centerline (CL) of the body portion of the at least one damaged mixing tube;
forming a vibration dampening material (210) around at least a portion of the plurality of mixing tubes (130);
based on the centerline of the body portion of the at least one damaged mixing tube, forming a tapered inner surface (180) extending from the combustion end (172) of the cladded tip portion to a taper/cylinder transition location (182) on the body portion of the at least one damaged mixing tube; and
removing the vibration dampening material.

12. The method of claim 11, further comprising machining the combustion end (172) of the cladded tip portion of each of the at least one damaged mixing tube so the plurality of mixing tubes have substantially identical lengths (LT), and machining an exterior surface of the cladded tip portion to smooth the exterior surface.

13. The method of any of claims 11 or 12, comprising forming the tapered inner surface (180) to an angle in a range of 0.1° to 2° relative to a cylindrical inner surface (186) of the body portion of the at least one damaged mixing tube.

14. The method of any of claims 11 through 13, wherein forming the vibration dampening material (210) around at least a portion of the plurality of mixing tubes includes encasing the at least the portion of the plurality of mixing tubes in a wax, and removing the vibration dampening material includes melting the wax.

15. The method of any of claims 11 through 13, wherein identifying the centerline (CL) of the body portion (160) of the at least one damaged mixing tube includes inserting a probe (200) into the body portion farther than the circular end surface where the cladded tip portion is coupled to the body portion, and identifying the centerline of the body portion using the probe.
